# EUROPEAN PATENT SPECIFICATION

(11) **EP 0 427 468 B1**
(45) Date of publication and mention of the grant of the patent: **23.02.1994**
(21) Application number: 90312011.1
(22) Date of filing: 01.11.1990
(51) Int. Cl.: F16F 9/36, F16F 9/42, F16F 9/02

(54) **Gas spring**
Gasfeder
Ressort à gaz

(30) Priority: 08.11.1989 US 433363; 08.01.1990 US 462003
(43) Date of publication of application: 15.05.1991
(73) Proprietor: Wallis, Bernard Joseph, Dearborn Michigan 48128 (US)
(72) Inventor: Wallis, Bernard Joseph, Dearborn Michigan 48128 (US)
(74) Representative: Singleton, Jeffrey

(56) References cited:
- DE-B- 1 095 054
- DE-U- 8 704 728
- FR-A- 766 946
- FR-A- 1 467 911
- FR-A- 2 304 835
- GB-A- 767 756
- GB-A- 2 188 698
- US-A- 2 670 816
- US-A- 2 930 608
- US-A- 3 103 993

## Description

In presses and dies, it has been common to utilize coil metal springs that fit in cylindrical pockets in a die in order to absorb the force of various operations such as metal stamping operations. It has also been common to design rams such that they incorporate gas springs which are either associated with a manifold or self contained.

DE-U-8704728 discloses a gas spring comprising a cylindrical body having a base wall and an integral side wall defining a bore, the bore including a lower cylindrical portion and an upper cylindrical portion of greater diameter than the lower cylindrical portion defining a shoulder, a piston positioned in the bore and engaging the lower portion of the bore, and an annular end cap (22) threaded into the upper portion (15) of the bore.

Among the objectives of the present invention are to provide an improved gas spring which effectively and efficiently provides, alone or in combination, the desired absorbing force; which provides heat dissipation of the heat produced during operation; and which can be readily adapted for use as a self-contained spring or for use in series with other gas springs or in a manifold or reservoir tank.

The present invention is defined in present claim 1, and according to one embodiment provides a self-contained gas spring comprising a cylindrical body having a base wall and an integral side wall with an open upper end defining a bore. The bore includes a lower cylindrical portion and an upper cylindrical portion of greater diameter than the lower cylindrical portion defining a shoulder. A piston of constant diameter is positioned in the bore and has a radial flange on its lower end with a wear bearing contacting the lower portion of the bore. An annular retainer is positioned on the shoulder and is adapted to be engaged by the flange on the piston. An annular end cap is threaded in the upper cylindrical portion of the bore and maintains the retainer against the shoulder. An annular lock nut is threaded in the upper portion of the bore locks the end cap in position. Circumferential spaced radial openings are provided adjacent the periphery of the lock nut for venting gas during disassembly if any gas remains. A charging valve and a rupture plug including a pressure relief disc are provided in the base wall. In one form, the gas spring includes a plurality of longitudinal spaced annular ribs which provide heat dissipation.

Gas springs in accordance with the present invention will now be described, by way of example, with reference to the accompanying drawings, in which :-
Figure 1 is a sectional view of a self-contained gas spring embodying the invention,
Figure 2 is a fragmentary sectional view of a modified form of gas spring,
Figure 3 is an elevational view of a modified form of gas spring,
Figure 4 is an elevational view of a further modified form of gas spring,
Figure 5 is an elevational view of another modified form of gas spring, and
Figure 6 is an elevational view of another form of modified spring.

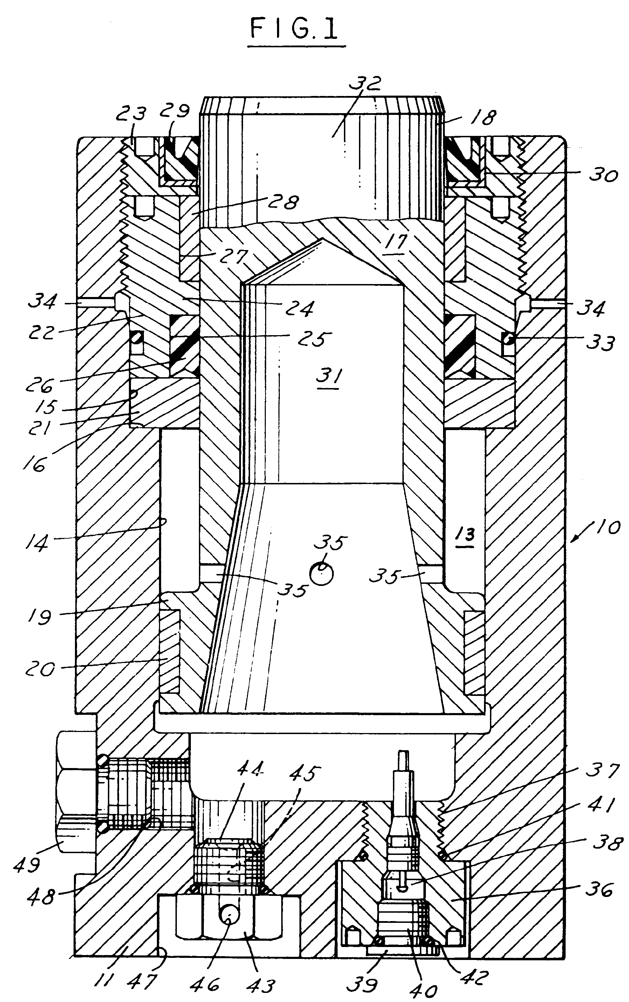

Referring to FIG. 1, the self-contained gas spring embodying the invention comprises a cylindrical body 10 having a closed base wall 11 and an integral side wall 12 defining a bore 13. The bore 13 includes a lower cylindrical portion 14 and an upper cylindrical portion 15 of greater diameter than the lower cylindrical portion 14 defining a shoulder 16. A piston 17 comprises a rod 18 of constant diameter and is positioned in the bore and has a radial flange 19 with a wear bearing 20 engaging the lower portion of the bore 14. An annular retainer 21 engages shoulder 16 and is maintained in position on the shoulder 16 by an annular end cap 22 which has external threads engaging internal threads in the upper bore portion 15. An annular lock nut 23 has external threads engaging the internal threads on the upper bore portion 15 to hold the lock nut and in turn, the retainer 21 against shoulder 16.

Retainer 21 includes a radially inwardly extending flange 24 defining an inwardly facing groove 25 on its lower end for receiving a cup seal 26 engaging the upper surface of the retainer 21. The flange 24 also defines an upper groove 27 for receiving an upper wear bearing 28 in the groove 27 between the flange 24 and the lock nut.

The lock nut 23 includes an upper groove for receiving a U-shaped wiper seal 29 that preferably includes a metal cap 30 that extends along its outer surface and lower surface. The wiper 29 functions to prevent contaminants from entering the space surrounding the rod portion 18 of the piston 17.

As shown, the major portion of the piston is open as at 31 except for the closed upper portion 32.

A seal in the form of an O-ring 33 is provided in a groove adjacent the unthreaded end of the periphery of the end cap 22. Radial openings 34 extend from the periphery of the end cap 22 to provide for venting as a safety measure to prevent any tendency that there might be to cause unthreading of the end cap 22 by the gas pressure of gas remaining in the cylinder during disassembly when the lock nut 23 is loosened or removed during maintenance.

The interior 31 of the piston communicates with the exterior of the piston rod through radial openings 35.

The gas spring further includes an adapter 36 threaded as at 37 into a shouldered opening in the base 11 that in turn is adapted to receive a one-way valve preferably in the form of a Schrader fitting 38 for charging the cylinder and an end plug 39 threaded as at 40 for closing the openings. O-ring seals 41, 42 are provided respectively for the adaptor 36 and the end plug 39.

Further, a rupture plug 43 is threaded into a stepped opening 47 that extends axially in the base wall 11 and includes a thin metal rupture disc 44 soldered at the upper end of an opening 45 which will rupture if the pressure becomes excessive at a predetermined pressure permitting venting through the opening 45 and the radial opening 46, the latter being directed against the enlarged portion 47 so that any particles and the like will be deflected rather than passing axially outwardly. A second plug 49 similar to the plug 39 is provided in a radial opening 48 by threading.

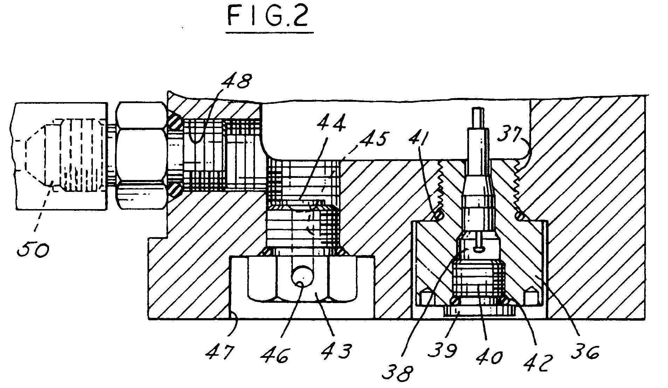

In the modified form shown in FIG. 2, the plug 39 is replaced with a fitting 50 so that the gas spring is converted from a self-contained gas spring to a gas spring that can be used in series or in a manifold with other gas springs.

In operation, the spring is charged to a predetermined pressure and functions, in a well known manner, to absorb the forces in a press or the like within which it is associated.

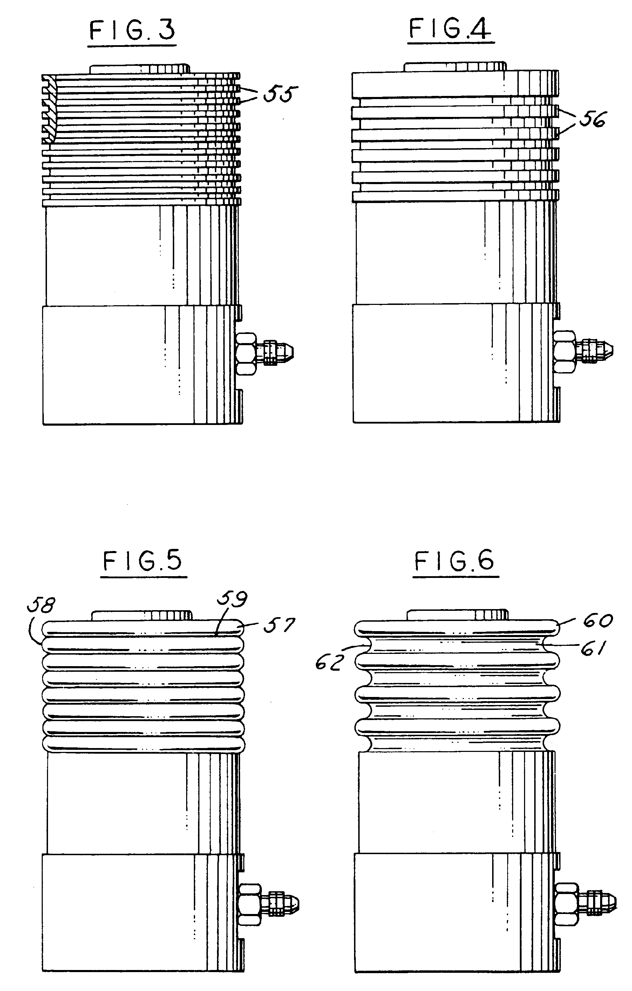

A well-known problem with respect to gas spring is the build up of heat during operation of the gas spring which, in some instances, may operate at high rates in connection with, for example, stamping presses. In order to dissipate the heat, it has been found that a plurality of longitudinally spaced annular ribs on the cylinder, preferably adjacent the upper end of the cylinder through which the piston projects effectively dissipates the heat. Referring to Fig. 3, ribs 55 are shown projecting radially outwardly in axially spaced relation and being rectangular in cross section.

In the form shown in Fig. 4, the ribs 56 are similar but have a greater width.

In the form shown in Fig. 5, the ribs 57 are formed with rounded peripheries 58 and are in the form of abutting ribs which are achieved by machining a groove 59.

In the form shown in Fig. 6, the ribs 60 are similar to those shown in Fig. 5 but are connected by wider grooves 61 having a rounded base 62.

It has been found that use of ribs effectively reduces the temperature of the gas cylinder. For example, when a gas cylinder having a 3 inch bore is operated at a rate of 35 strokes per minute, the temperature is reduced by about 15°F (9.5°C) as constrasted to an identical gas spring without the grooves of FIG. 3.

It can thus be seen that there has been provided a gas spring which effectively and efficiently provides the desired absorbing force; which includes provision for relief of excess pressure; which includes provision for relief of pressure in case of failure of seals; which provides heat dissipation of the heat produced during operation; and which can be readily adapted for use as a self-contained spring or in series or in a manifold with other gas springs.

## Claims

1. A gas spring comprising a cylindrical body (10) having a base wall (11) and an integral side wall (12) defining a bore (13), the bore (13) including a lower cylindrical portion (14) and an upper cylindrical portion (15) of greater diameter than the lower cylindrical portion defining a shoulder (16), a piston (17) having a rod portion (18) positioned in the bore (13) and having a flange (19), and an annular end cap (22) threaded into the upper portion (15) of the bore,
characterised in that:
said rod portion (18) is of constant diameter and said flange (19) has a bearing (20) engaging the lower cylindrical portion (14) of the bore (13),
and in that the gas spring further comprises:
an annular retainer (21) engaging said shoulder (16), and
an annular lock nut (23) threaded into the upper portion (15) of the bore (13) and engaging the end cap (22),
and in that:
the end cap (22) engages the retainer (21).

2. A gas spring set forth in claim 1, characterised in that it further includes a rupture plug (43) in the base wall (11) for venting pressure when the pressure exceeds a predetermined amount.

3. A gas spring set forth in claim 1 or 2, characterised in that it further includes a charging valve (38) in the base wall (11).

4. A gas spring set forth in any of the preceding claims, characterised in that it further includes sealing means (33) between the inner surface of the upper portion (15) of the bore (13) and the end cap (22).

5. A gas spring set forth in claim 4, characterised in that it further includes openings (34) through the side wall (12) of the cylinder (10) at a point spaced upwardly and extending outwardly from said sealing means (33) for venting the pressure within the cylinder.

6. A gas spring set forth in any of the preceding claims, characterised in that it further includes a cup seal (26) held by the end cap (22) in contact with the retainer (21).

7. A gas spring set forth in any of the preceding claims, characterised in that it further includes a wiper seal (29) retained by the lock nut (23) in engagement with the rod portion (18) of the piston (17).

8. A gas spring set forth in any of the preceding claims, characterised in that it further includes a radial opening (48) in the base wall (11) which can be selectively closed by a plug (49) to provide a self-contained gas spring or by a fitting (50) for connecting the gas spring with another gas spring in series, or to an external manifold.

9. A gas spring according to any of claims 1 to 8, characterised in that the cylindrical body (10) is provided with a plurality of longitudinally spaced annular ribs (55,56,57,60) providing for heat dissipation.

10. A gas spring set forth in claim 9, characterised in that the ribs (55,56,57,60) are spaced from one another by grooves (59,62).

11. A gas spring set forth in claim 10, characterised in that the grooves (59,62) space the ribs (55,56,57,60) longitudinally from one another.

12. A gas spring set forth in any of claims 9 to 11, characterised in that the ribs (57,60) have rounded peripheral edges.

13. A gas spring set forth in claim 12, characterised in that the ribs (60) are separated from one another by annular grooves (61) having rounded bases (62).

## Patentansprüche

1. Gasfeder, umfassend einen zylindrischen Körper (10) mit einer Bodenwand (11) und einer (damit) materialeinheitlichen, eine Bohrung (13) festlegenden Seitenwand (12), welche Bohrung (13) unter Festlegung einer Schulter (16) einen unteren zylindrischen Abschnitt (14) und einen oberen zylindrischen Abschnitt (15), dessen Durchmesser größer ist als der des unteren zylindrischen Abschnitts, aufweist, einen Kolben (17) mit einem in der Bohrung (13) angeordneten Rundstababschnitt (18) und mit einem Flansch (19) sowie eine in den oberen Abschnitt (15) der Bohrung eingeschraube ringförmige Endkappe (22),
dadurch gekennzeichnet, daß
der Rundstababschnitt (18) einen konstanten Durchmesser aufweist und der Flansch (19) mit einem mit dem unteren zylindrischen Abschnitt (14) der Bohrung (13) in Berührung stehenden Lager (20) versehen ist,
und daß die Gasfeder ferner umfaßt:
einen an der Schulter (16) anliegenden ringförmigen Halter (21) sowie
eine in den oberen Abschnitt (15) der Bohrung (13) eingeschraubte und an der Endkappe (22) anliegende Sicherungsmutter (23),
und daß
die Endkappe (22) am Halter (21) anliegt.

2. Gasfeder Nach Anspruch 1, dadurch gekennzeichnet, daß sie ferner einen in der Bodenwand (11) angeordneten Berststopfen (43) zum Ablassen des Drucks, wenn dieser eine vorbestimmte Größe übersteigt, aufweist.

3. Gasfeder nach Anspruch 1 oder 2, dadurch gekennzeichnet, daß sie ferner ein in der Bodenwand (11) angeordnetes Füllventil (38) aufweist.

4. Gasfeder nach einem der vorangehenden Ansprüche, dadurch gekennzeichnet, daß sie weiterhin ein Dichtmittel (33) zwischen der Innenfläche des oberen Abschnitts (15) der Bohrung (13) und der Endkappe (22) aufweist.

5. Gasfeder nach Anspruch 4, dadurch gekennzeichnet, daß sie ferner Öffnungen (34), welche die Seitenwand (12) des Zylinders (Körpers) (10) an einer aufwärts vom Dichtmittel (33) beabstandeten Stelle durchsetzen und vom Dichtmittel (33) nach außen verlaufen, zum Ablassen des im Zylinder herrschenden Drucks aufweist.

6. Gasfeder nach einem der vorangehenden Ansprüche, dadurch gekennzeichent, daß sie weiterhin eine durch die Endkappe (22) mit dem Halter (21) in Berührung oder Anlage gehaltene Napfdichtung (26) aufweist.

7. Gasfeder nach einem der vorangehenden Ansprüche, dadurch gekennzeinchent, daß sie eine durch die Sicherungsmutter (23) gegen den Rundstababschnitt (18) des Kolbens (17) in Anlage gehaltene Abstreifdichtung (29) aufweist.

8. Gasfeder nach einem der vorangehenden Ansprüche, dadurch gekennzeichnet, daß sie ferner in der Bodenwand (11) eine radiale Öffnung oder Bohrung (48) aufweist, die selektiv mittels eines Stopfens (49) zur Bildung einer in sich abgeschlossenen Gasfeder oder mittels eines Fittings bzw. Anschlusses (50) zum Verbinden der Gasfeder in Reihe mit einer anderen Gasfeder oder mit einem externen Vorteiler verschließbar ist.

9. Gasfeder nach einem der Ansprüche 1 bis 8, dadurch gekennzeichnet, daß der zylindrische Körper (10) mit einer Anzahl von auf Längsabstände verteilten, ringförmigen bzw. umlaufenden Rippen (55, 56, 57, 60) für Wärmeableitung verschen ist.

10. Gasfeder nach Anspruch 9, dadurch gekennzeichnet, daß die Rippen (55, 56, 57, 60) durch Rillen (59, 62) voneinander getrennt sind.

11. Gasfeder nach Anspruch 10, dadurch gekennzeichnet, daß die Rillen (59, 62) die Rippen (55, 56, 57, 60) auf gegenseitigen Längsabstand halten.

12. Gasfeder nach einem der Ansprüche 9 bis 11, dadurch gekennzeichnet, daß die Rippen (57, 60) abgerundete Umfangskanten aufweisen.

13. Gasfeder nach Anspruch 12, dadurch gekennzeichnet, daß die Rippen (60) durch ringförmige bzw. umlaufende Rillen (61) mit abgerundeten Sohlen (62) voneinander getrennt sind.

## Revendications

1. Ressort à gaz comprenant un corps cylindrique (10) présentant une paroi de base (11) et une paroi latérale monobloc (12) définissant un alésage (13), l'alésage (13) comprenant une partie cylindrique inférieure (14) et une partie cylindrique supérieure (15) à diamètre supérieur à celui de la partie cylindrique inférieure, définissant un épaulement (16), un piston (17) présentant une partie de tige (18) disposée dans l'alésage (13) et une bride (19), et un capuchon d'extrémité annulaire (22) vissé dans la partie supérieure (15) de l'alésage,
caractérisé en ce que :
ladite partie de tige (18) est dotée d'un diamètre constant et ladite bride (19) présente un palier (20) en contact avec la partie cylindrique inférieure (14) de l'alésage (13),
et en ce que le ressort à gaz comprend en outre :
un organe de maintien annulaire (21) en contact avec ledit épaulement (16), et
un écrou de verrouillage annulaire (23) vissé dans la partie supérieure (15) de l'alésage (13) et en contact avec le capuchon d'extrémité (22),
et en ce que :
le capuchon d'extrémité (22) vient en prise avec l'organe de maintien (21).

2. Ressort à gaz selon la revendication 1, caractérisé en ce qu'il comprend en outre un bouchon de rupture (43) dans la paroi de base (11), pour évacuer une pression lorsque la pression est supérieure à une valeur prédéterminée.

3. Ressort à gaz selon la revendication 1 ou 2, caractérisé en ce qu'il comprend en outre une soupape de remplissage (38) dans la paroi de base (11).

4. Ressort à gaz selon l'une quelconque des revendications précédentes, caractérisé en ce qu'il comprend en outre un moyen d'étanchéité (33) entre la surface intérieure de la partie supérieure (15) de l'alésage (13) et le capuchon d'extrémité (22).

5. Ressort à gaz selon la revendication 4, caractérisé en ce qu'il comprend en outre des ouvertures (34) dans la paroi latérale (12) du cylindre (10), en un emplacement espacé vers le haut et s'étendant vers l'extérieur dudit moyen d'étanchéité (33), pour évacuer la pression régnant dans le cylindre.

6. Ressort à gaz selon l'une quelconque des revendications précédentes, caractérisé en ce qu'il comprend en outre un joint (26) maintenu par le capuchon d'extrémité (22) en contact avec l'organe de maintien (21).

7. Ressort à gaz selon l'une quelconque des revendications précédentes, caractérisé en ce qu'il comprend en outre un joint frotteur (29) maintenu par l'écrou de verrouillage (23) en contact avec la partie de tige (18) du piston (17).

8. Ressort à gaz selon l'une quelconque des revendications précédentes, caractérisé en ce qu'il comprend en outre une ouverture radiale (48) dans la paroi de base (11), qui peut être fermée sélectivement par un bouchon (49) pour produire un ressort à gaz autonome ou par un raccord (50), pour relier en série le ressort à gaz à un autre ressort à gaz ou à un collecteur extérieur.

9. Ressort à gaz selon l'une quelconque des revendications 1 à 8, caractérisé en ce que le corps cylindrique (10) est pourvu d'une pluralité de nervures annulaires (55, 56, 57, 60) espacées longitudinalement, produisant une dissipation de chaleur.

10. Ressort à gaz selon la revendication 9, caractérisé en ce que les nervures (55, 56, 57, 60) sont espacés les unes des autres par des gorges (59, 62).

11. Ressort à gaz selon la revendication 10, caractérisé en ce que les gorges (59, 62) espacent les nervures (55, 56, 57, 60) longitudinalement les unes des autres.

12. Ressort à gaz selon l'une quelconque des revendications 9 à 11, caractérisé en ce que les nervures (57, 60) présentent des bords périphériques arrondis.

13. Ressort à gaz selon la revendication 12, caractérisé en ce que les nervures (60) sont séparées les unes des autres par des gorges annulaires (61) présentant des bases arrondies (62).
